# EUROPÄISCHE PATENTANMELDUNG

(11) **EP 0 887 762 A2**
(43) Veröffentlichungstag der Anmeldung: **30.12.1998**
(21) Anmeldenummer: 98111778.1
(22) Anmeldetag: 26.06.1998
(51) Int. Cl.: G06K 15/02, B41J 3/36

(54) **Handdruckvorrichtung**

(30) Priorität: 27.06.1997 DE 29711247 U
(71) Anmelder: Beling, Manfred, 65199 Wiesbaden (DE); Höllerer, Ulrich, 65189 Wiesbaden (DE)
(72) Erfinder: Beling, Manfred, 65199 Wiesbaden (DE); Höllerer, Ulrich, 65189 Wiesbaden (DE)
(74) Vertreter: Kampfenkel, Klaus, Dipl.-Ing.

(57) **Zusammenfassung**

Damit bei einer Druckvorrichtung, wenigstens umfassend eine Druckeinheit (2) mit einem Druckkopf (3) zum Drucken zumindest einer Zeile auf einem Druckmedium (6), eine Basiseinheit (4) zum Verarbeiten der Signale aus einem Rechner (1) und zum Ansteuern der Druckeinheit (3) und eine Schnittstelleneinrichtung (5) zum Verbinden der Druckvorrichtung mit dem Rechner (1), eine Beschriftung von Rechnungen und ähnlichen Papieren, aber auch von anderen Materialien zeit- und kostensparend durchgeführt werden kann, ist vorgesehen, daß die Druckeinheit (2) zum manuellen, wahlfreien Aufsetzen auf das Druckmedium (6) eingerichtet ist.

## Beschreibung

Die Erfindung betrifft eine Druckvorrichtung umfassend eine Druckeinheit mit Druckkopf, eine Basiseinheit und eine Schnittstelleneinrichtung.

Mit Ausnahme von einigen wenigen Fällen, ist das manuelle Schreiben in der heutigen Zeit durch maschinelles Drucken verdrängt worden. Hierbei stehen Zeitersparnis, Lesbarkeit und die Möglichkeit, den Text nach einer eventuellen Korrektur ohne großen Aufwand noch einmal ausdrucken zu können, im Vordergrund.

In einigen Fällen jedoch ist die Nutzung eines Druckers nicht möglich. Dies betrifft beispielsweise den Vorgang der Kontierung in einem Steuerbüro, bei welchem dem Vorgang zugeordnete alphanumerische Zeichen manuell auf die jeweilige Rechnung aufgebracht werden. In ähnlicher Weise betrifft dies beispielsweise auch die Beschriftung von Frachtpapieren während des Transports von Waren. Eine mögliche Lösung des Problems besteht im Druck von aufklebbaren Etiketten, welche auf die entsprechenden Papiere aufgebracht werden. Dies ist jedoch mit zusätzlichen Arbeitsschritten verbunden und daher nicht besonders effektiv.

Der Erfindung liegt die Aufgabe zugrunde, eine Vorrichtung bereitzustellen, mit der eine Beschriftung derartiger Papiere, aber auch anderer Materialien zeit- und kostensparend durchgeführt werden kann.

Diese Aufgabe wird überraschend einfach durch eine Druckvorrichtung, umfassend eine Druckeinheit mit einem Druckkopf, eine Basiseinheit und eine Schnittstelleneinrichtung, bereitgestellt, wobei die Druckeinheit beliebig auf dem zu bedruckenden Medium, beispielsweise Papier, aufgesetzt werden kann.

Mit der erfindungsgemäßen Vorrichtung kann die obenstehend dargestellte Kontierung von Rechnungen mit einer großen Zeitersparnis und damit kostengünstig durchgeführt werden. Im Gegensatz zum üblichen Arbeitsablauf der Kontierung, bei welchem zunächst Kontierungsdaten von Hand auf die jeweiligen Belege und Rechnungen aufgebracht werden und später von derselben oder einer anderen Person in den Computer eingegeben und gleichzeitig Daten auf die jeweiligen Rechnungen aufgebracht werden, kann das Übertragen der Daten auf die Rechnungen mit Hilfe der erfindungsgemäßen Druckvorrichtung ohne das Kontieren von Hand nach der Eingabe der Daten in den Computer automatisch erfolgen. Zu diesem Zweck wird die Druckeinheit der Druckvorrichtung auf das zu bedruckende Medium aufgesetzt und der Druck gestartet. Somit läßt sich beispielsweise der Vorgang der Kontierung derart rationalisieren, daß mit der einen Hand die Tastatur des Rechners bedient und mit der anderen Hand die Druckeinheit auf die jeweiligen Rechnungen aufgesetzt wird. Das beispielhaft zu bedruckende Papier kann eine im wesentlichen beliebige Größe aufweisen, die nur durch die aufzudruckende Zeile beschränkt ist.

Ist die Basiseinheit zum Verarbeiten der Signale aus dem Rechner und zum Ansteuern der Druckeinheit von dieser getrennt, können das Gewicht und die Abmessungen der Druckeinheit so gering gehalten werden, daß sie leicht mit der Hand geführt, angehoben und aufgesetzt werden kann. Die Kommunikation zwischen der Basiseinheit und der Druckeinheit kann auf vielfältige Weise realisiert werden. Eine übliche Leitungsverbindung ist vergleichsweise kostengünstig. Es kann jedoch auch eine Glasfaserverbindung oder eine drahtlose Verbindung zwischen Basiseinheit und Druckeinheit vorgesehen werden. Durch eine drahtlose Verbindung entfällt die unter Umständen für das Bewegen der Druckeinheit auf dem Druckmedium hinderliche Schnur zwischen der Basis- und der Druckeinheit. Um die Druckvorrichtung an einen Rechner anzuschließen, ist eine Schnittstelleneinrichtung in der Druckvorrichtung vorgesehen. Diese Schnittstelleneinrichtung kann eine herkömmliche serielle, parallele, USB-Schnittstelle oder eine andere Schnittstelle umfassen. Derartige übliche Schnittstellen weisen den Vorteil auf, daß die erfindungsgemäße Vorrichtung an herkömmliche Rechnersysteme angebunden werden kann, ohne daß weitere spezielle Hardware notwendig ist. Die erfindungsgemäße Vorrichtung kann somit an alle verwendete Rechnersysteme angepaßt werden.

Umfaßt die Druckeinheit einen Antrieb zum Bewegen des Druckkopfes über das zu bedruckende Medium, kann eine längs der Bewegungsrichtung verlaufende Zeile ausgedruckt werden. Die Länge der Zeile, d. h. die Anzahl der Buchstaben oder Zahlen, läßt sich je nach Anwendung durch entsprechende Gestaltung der Druckeinheit auswählen, wobei die Druckeinheit umso kompakter und einfacher zu handhaben ist, je weniger alphanumerische Zeichen in einer Druckzeile zu drucken sind.

Die erfindungsgemäße Vorrichtung kann weiterhin zum Ausdrucken mehrerer Zeichenreihen eingerichtet sein. Damit lassen sich beispielsweise auch kleinere Schriftsätze auf das Medium aufdrucken. Eine derartige Einrichtung kann einerseits einen aktiven Antrieb für den Druckkopf oder für die Druckeinheit selbst in einer Richtung senkrecht zur Druckzeile umfassen, sie kann jedoch auch durch das Erfassen der manuell, senkrecht zur Druckzeile geführten Bewegung der Druckeinheit und gleichzeitiges entsprechendes Ansteuern des Druckkopfes bestehen, womit zusätzliche mechanische Komponenten entfallen können.

Als Druckkopf kommen prinzipiell herkömmlichen oder abgeänderte Druckerköpfe mit kleinen Ausmaßen in Frage, beispielsweise ein unter Umständen modifizierter Tintenstrahlkopf oder Matrixdruckkopf. Derartige Einrichtungen sind auf dem Gebiet gut entwickelt und können für die erfindungsgemäße Vorrichtung, teilweise nach einer weiteren Miniaturisierung, übernommen werden. Ein Tintenstrahlkopf zeichnet sich beispielsweise durch seine Zuverlässigkeit, sein gutes Auflösungsvermögen und ein niedriges Betriebsgeräusch auf, während mit einem Matrixdrucker aufgrund seiner Arbeitsweise auch mehrere Papiere gleichzeitig bedruckt werden können, wenn beispielsweise zwischen den Blättern Kohlepapier angeordnet ist.

Um die Druckvorrichtung mit weiteren Funktionen auszustatten, kann die Schnittstelleneinrichtung eine der Basiseinheit zugeordneten Schnittstellenkarte im Rechner umfassen, wobei diese Schnittstellenkarte und die Basiseinheit miteinander verbunden sind. Mit einer derartigen Schnittstellenkarte läßt sich beispielsweise über die Basiseinheit nicht nur der Druckkopf, sondern auch eine an der Druckeinheit angeordnete Anzeigeeinrichtung ansteuern. Diese Anzeigeeinrichtung an der Druckeinheit läßt sich beispielsweise zur Anzeige der auszudruckenden alphanumerischen Zeile beziehungsweise Zeilen nutzen. Weiterhin läßt sich beispielsweise auch ein Hinweis auf das nächste zu bedruckende Dokument einblenden, beispielsweise der Betrag auf der als nächstes zu bedruckenden Rechnung. Auf diese Weise kann eine Kontrolle des Arbeitsvorgangs bereitgestellt werden. Als Anzeigeeinrichtung lassen sich viele herkömmliche verwenden, beispielsweise ein LED-Display oder ein energiesparendes LCD-Display.

Die Funktionalität der erfindungsgemäßen Druckvorrichtung wird weiter erhöht, wenn an der Druckeinheit ferner eine Eingabeeinrichtung angeordnet ist. Mit deren Hilfe läßt sich beispielsweise über eine bestimmte Taste der Druckvorgang starten. Weiterhin bietet diese Eingabeeinrichtung die Möglichkeit, unabhängig von der den Rechner steuernden Software zusätzliche alphanumerische Zeichen auf das Druckmedium aufzubringen. Weiterhin kann die Vorrichtung somit auch ohne den Anschluß an einen Rechner betrieben werden.

Die Erfindung wird im folgenden durch Beschreiben einiger Ausführungsformen unter Bezugnahme auf die anliegenden schematischen und nicht maßstabsgerechten Zeichnungen erläutert, von denen
- Fig. 1: eine an den Rechner 1 angeschlossene, erfindungsgemäße Druckvorrichtung zeigt, wobei die Druckeinheit 2 auf einem Druckmedium 6 aufliegt; und
- Fig. 2: eine an einen Rechner 1 angeschlossene, erfindungsgemäße Druckvorrichtung zeigt, wobei die Druckeinheit 2 auf einem Druckmedium 6 aufliegt und die Druckeinheit zusätzlich zu der in Fig. 1 gezeigten eine Anzeigeeinrichtung 11 und eine Eingabeeinrichtung 9 aufweist.

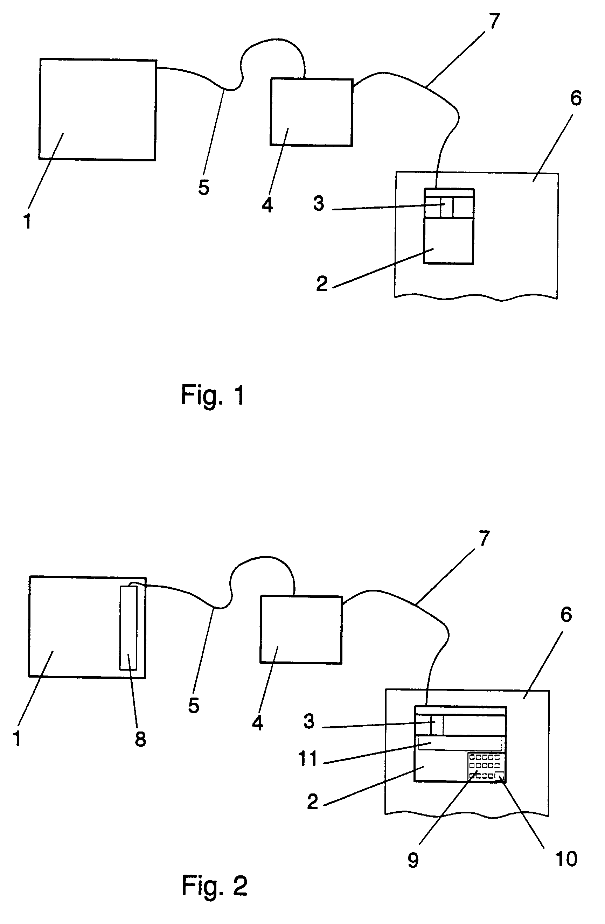

Fig. 1 zeigt eine Ausführungsform der erfindungsgemäßen Druckvorrichtung. Diese Druckvorrichtung umfaßt eine Druckeinheit 2 mit einem Druckkopf 3 und eine Basiseinheit 4, die mit einem Rechner 1 verbunden ist. Der Druckkopf 3 dient zum Drucken zumindest einer Zeile auf einem Druckmedium 6. Die Basiseinheit 4, welche zum Ansteuern der Druckeinheit 3 mit dieser verbunden ist, dient zum Verarbeiten der Signale aus dem Rechner 1 und weist eine eigene Stromversorgung auf. Die Basiseinheit 4 und der Rechner 1 sind über eine Schnittstelleneinrichtung 5 miteinander verbunden. Basiseinheit und Druckeinheit sind örtlich voneinander getrennt und mittels einer Kommunikationseinrichtung 7 miteinander verbunden. Die Druckeinheit weist eine Breite von etwa 7 cm bei einer Länge von 11 cm und einer Höhe von 4 cm auf. In einer Ausführungsform umfaßt die Kommunikationseinrichtung 7 eine Drahtverbindung zwischen der Basiseinheit 4 und der Druckeinheit 2, worüber die Druckeinheit 2 mit Ansteuersignalen und elektrischer Energie versorgt wird.

In einer anderen Ausführungsform umfaßt die Kommunikationseinrichtung 7 eine drahtlose Verbindung in Form einer Infrarot-Übertragung oder einer Radiofrequenz-Übertragung. Entsprechende Infrarot-Schnittstellen beziehungsweise Radiofrequenz-Schnittstellen sind in diesen Fällen sowohl in der Basiseinheit 4 als auch in der Druckeinheit 2 umfaßt. Die Energieversorgung der Druckeinheit wird dann durch einen Akku, welcher in der Druckeinheit angeordnet ist, bereitgestellt.

Je nach Kopplung der erfindungsgemäßen Druckvorrichtung umfaßt die Schnittstelleneinrichtung 5 zum Anschluß an einen Rechner 1 die für die jeweiligen Rechnertypen charakeristische Schnittstelle. Im Falle des Anschlusses der erfindungsgemäßen Vorrichtung an PCs ist eine serielle, eine parallele oder eine USB-Schnittstelle in der Basiseinheit integriert, welche sich somit mittels eines entsprechenden Kabels mit der entsprechenden Schnittstelle im Rechner verbinden läßt.

Die Druckeinheit 2 weist einen Antrieb zum Bewegen des Druckkopfes 3 über das Druckmedium 6 auf. Diese Bewegungsrichtung definiert die Druckzeile. In der vorliegenden beispielhaften Ausführungsform umfaßt die maximale Druckzeilenbreite 4 cm. Der Antrieb umfaßt einen herkömmlichen Schrittmotor. Beim Ausdruck einer Zeile bewegt sich die Druckeinheit nicht, sondern liegt fest auf dem zu bedruckenden Medium auf.

Mehrere Reihen können mit einer Ausführungsform bedruckt werden, welche zum Verschieben des Druckkopfes 3 in im wesentlichen senkrechter Richtung zur Druckzeile eingerichtet ist. Dies betrifft einerseits eine erfindungsgemäße Vorrichtung, bei welcher sich der Kopf 3 zusätzlich senkrecht zur Zeilenrichtung bewegen läßt und entsprechend angesteuert wird, und andererseits eine weitere Ausführungsform, bei welcher die Druckeinheit 2 manuell über das Druckmedium 6 bewegt wird und diese Bewegung elektronisch erfaßt und der Kopf entsprechend angesteuert wird. Hierbei liegt die Druckeinheit mit 4 voneinander beabstandeten Rollen auf dem Druckmedium auf und kann vom Anwender über das Druckmedium gezogen werden, wobei auf die Bewegung der Druckeinheit senkrecht zur Druckzeile durch das Erfassung der Bewegung der Rollen rückgeschlossen wird.

Die beschriebenen Ausführungsformen umfassen Tintenstrahldruckköpfe, wobei auch Ausführungen mit Matrixdruckköpfen realisierbar sind.

Fig. 2 zeigt eine erfindungsgemäße Druckvorrichtung, welche weiterhin eine Anzeigeeinrichtung 11 umfaßt, die an der Druckeinheit 2 angeordnet ist. Die Anzeigeeinrichtung ist ein beispielhaftes einzeiliges LCD-Display mit 50 alphanumerischen Zeichen. Die Vorrichtung umfaßt ferner eine Eingabeeinrichtung 9 in Form einer beispielhaften Folientastatur. Zum Ansteuern der zusätzlichen Funktionen in der Druckeinheit umfaßt die Schnittstelleneinrichtung 5 zum Verbinden des Rechners mit der Basiseinheit eine spezielle Schnittstellenkarte 8 im Rechner 1. Diese Karte dient zum Erfassen und zur Weitergabe der zusätzlichen Daten für die Anzeigeeinrichtung 11 und die Eingabeeinrichtung 9. Über die Eingabeeinrichtung kann mittels einer bestimmten Taste der Druckvorgang gestartet werden. Zur weiteren Eingabe von Druckzeichen oder zum Übermitteln von Daten zum Rechner umfaßt die Eingabeeinrichtung 9 eine alphanumerische Tastatur. Die an dieser Tastatur eingegebenen Zeichen werden in einer Ausführungsform über die Basiseinheit 4 und die Schnittstelleneinrichtung 5 zum Rechner geführt und stehen somit einer weiteren Verarbeitung zur Verfügung.

Bei der Übertragung von den per Tastatur in den Computer eingegebenen Kontierungszahlen und dem zugehörigen Text über die erfindungsgemäße Druckvorrichtung auf die Belege und Rechnungen kann der Text, der nicht benötigt wird, durch einen Tastendruck unterdrückt werden, so daß auf diesen nur die benötigten Kontierungsdaten aufgedruckt werden.

## Patentansprüche

1. Druckvorrichtung, wenigstens umfassend
- eine Druckeinheit (2) mit einem Druckkopf (3) zum Drucken zumindest einer Zeile auf einem Druckmedium (6)
- eine Basiseinheit (4) zum Verarbeiten der Signale aus einem Rechner (1) und zum Ansteuern der Druckeinheit (3)
- eine Schnittstelleneinrichtung (5) zum Verbinden der Druckvorrichtung mit dem Rechner (1)
dadurch gekennzeichnet, daß
die Druckeinheit (2) zum manuellen, wahlfreien Aufsetzen auf das Druckmedium (6) eingerichtet ist.

2. Druckvorrichtung nach Anspruch 1, dadurch gekennzeichnet, daß die Basiseinheit (4) und die Druckeinheit (2) örtlich voneinander getrennt sind, wobei eine Kommunikationseinrichtung (7) zum Verbinden der Basiseinheit (4) mit der Druckeinheit (2) umfaßt ist.

3. Druckvorrichtung nach Anspruch 2, dadurch gekennzeichnet, daß die Kommunikationseinrichtung (7) eine Drahtverbindung zwischen Basiseinheit (4) und Druckeinheit (2) umfaßt.

4. Druckvorrichtung nach Anspruch 2, dadurch gekennzeichnet, daß die Kommunikationseinrichtung (7) eine drahtlose Verbindung zwischen Basiseinheit (4) und Druckeinheit (2) umfaßt.

5. Druckvorrichtung nach einem der vorstehenden Ansprüche, dadurch gekennzeichnet, daß die Schnittstelleneinrichtung (5) eine serielle, parallele oder eine USB-Schnittstelle an der Basiseinheit (4) zum Anschluß an den Rechner (1) umfaßt.

6. Druckvorrichtung nach einem der vorstehenden Ansprüche, dadurch gekennzeichnet, daß die Druckeinheit (2) einen Antrieb zum Bewegen des Druckkopfes (3) über das Druckmedium (6) umfaßt.

7. Druckvorrichtung nach einem der vorstehenden Ansprüche, dadurch gekennzeichnet, daß die Druckeinheit (2) zum Ausdrucken mehrerer Zeichenreihen eingerichtet ist.

8. Druckvorrichtung nach einem der vorstehenden Ansprüche, dadurch gekennzeichnet, daß der Druckkopf (3) einen Tintenstrahldruckkopf umfaßt.

9. Druckvorrichtung nach einem der vorstehenden Ansprüche, dadurch gekennzeichnet, daß die Schnittstelleneinrichtung (5) eine der Basiseinheit zugeordnete Schnittstellenkarte (8) im Rechner umfaßt, wobei die Schnittstellenkarte und die Basiseinheit (4) miteinander verbunden sind.

10. Druckvorrichtung nach einem der vorstehenden Ansprüche, dadurch gekennzeichnet, daß an der Druckeinheit (2) ferner eine Anzeigeeinrichtung (11) angeordnet ist.

11. Druckvorrichtung nach einem der vorstehenden Ansprüche, dadurch gekennzeichnet, daß an der Druckeinheit (2) ferner eine Eingabeeinrichtung (9) angeordnet ist.

12. Druckvorrichtung nach einem der vorstehenden Ansprüche, dadurch gekennzeichnet, daß die Eingabeeinrichtung (9) eine Taste (10) zum Starten des Druckvorganges umfaßt.

13. Druckvorrichtung nach einem Ansprüche 11 oder 12, dadurch gekennzeichnet, daß die Eingabeeinrichtung (9) eine alphanumerische Tastatur umfaßt.
